# EUROPEAN PATENT APPLICATION

(11) **EP 4 817 422 A1**
(43) Date of publication of application: **07.10.2026**
(21) Application number: 24897190.5
(22) Date of filing: 30.10.2024
(51) Int. Cl.: A23G 1/32, A23F 5/00, A23G 1/48

(54) **COFFEE-FLAVORED CHOCOLATE COMPOSITION**

(30) Priority: 27.11.2023 JP 2023199946
(71) Applicant: Suntory Holdings Limited, Osaka-shi, Osaka 530-8203 (JP)
(72) Inventor: ITOYAMA, Akinori, Kawasaki-shi, Kanagawa 211-0067 (JP); NAKAJIMA, Makoto, Kawasaki-shi, Kanagawa 211-0067 (JP); SUGINO, Ryosuke, Kawasaki-shi, Kanagawa 211-0067 (JP); ISHII, Tomoki, Kawasaki-shi, Kanagawa 211-0067 (JP); ASAMI, Yoji, Tokyo 135-8631 (JP)
(74) Representative: Vossius & Partner Patentanwälte Rechtsanwälte mbB
(86) International application number: PCT/JP2024/038675
(87) International publication number: WO 2025/115501

(57) **Abstract**

To provide: a chocolate composition having a delicious coffee flavor balanced with bitterness, a fruity aroma and body; and a method for producing the same. The content of ethyl acetate in the chocolate composition is adjusted to 5-1500 ppb and/or the content of phenethyl alcohol is adjusted to 5-1500 ppb, and the total content of kahweol palmitate and cafestol palmitate is adjusted to 700-7800 mg/kg.

## Description

### Technical Field

The present invention relates to a coffee-flavored chocolate composition and a method for producing the coffee-flavored chocolate composition.

### Background Art

Due to diversification of preferences in recent years, chocolate having a flavor different from those of cocoa and milk has attracted attention. Although coffee-flavored chocolate is also known, at present, there are many products that mainly add coffee extract or instant coffee to cacao oil and/or fat to impart a coffee flavor.

In recent years, it has been reported that a coffee flavor can be imparted to a food such as chocolate by adding a ground product of roasted coffee beans (Patent Documents 1 and 2). In particular, although chocolate is made of cacao beans as a raw material, the cacao beans subjected to fermentation treatment are used as a chocolate raw material for the purpose of generating an aroma component unique to chocolate and alleviating bitterness and astringency of the cacao beans.

### Citation List

### Patent Documents

Patent Document 1: JP 2015-073462 A
Patent Document 2: JP 2020-089331 A

### Summary of Invention

### Technical Problem

The present inventors have focused on the fact that cacao beans subjected to fermentation treatment are used as a chocolate raw material, and considered that when a fermented aroma component derived from a fermented coffee bean is blended in a chocolate composition to which a coffee flavor is imparted, fruity aroma derived from fruits such as coffee beans and cacao beans can be strongly felt. That is, an object of the present invention is to provide a delicious coffee-flavored chocolate composition with a good balance among bitterness, fruity aroma, and body feeling.

### Solution to Problem

As a result of intensive studies to solve the above problems, the present inventors have found that a delicious coffee-flavored chocolate composition with a good balance among bitterness, fruity aroma, and body feeling can be obtained by blending roasted coffee beans into the chocolate composition, adding ethyl acetate and phenethyl alcohol as fermented aroma components contained in fermented coffee beans, and adjusting to a specific range, thereby completing the present invention.

That is, the present invention relates to the following, but is not limited thereto.
(1) A coffee-flavored chocolate composition containing from 5 to 1500 ppb ethyl acetate and/or from 5 to 1500 ppb phenethyl alcohol, wherein
   a total content of kahweol palmitate and cafestol palmitate is from 700 to 7800 mg/kg.
(2) The chocolate composition according to (1), containing a finely ground product of roasted coffee beans having a median diameter of from 5 to 50 µm.
(3) The chocolate composition according to (1) or (2), containing from 10 to 1300 ppb ethyl acetate.
(4) The chocolate composition according to any of (1) to (3), containing from 10 to 1300 ppb phenethyl alcohol.
(5) The chocolate composition according to any of (1) to (4), wherein the total content of kahweol palmitate and cafestol palmitate is from 1000 to 7500 mg/kg.
(6) The chocolate composition according to any of (1) to (5), wherein the content of kahweol palmitate is from 520 to 5700 mg/kg.
(7) The chocolate composition according to any of (1) to (5), wherein the content of cafestol palmitate is from 180 to 2100 mg/kg.
(8) The chocolate composition according to (2), wherein a content of the finely ground product of roasted coffee beans in a chocolate is from 4 to 38 mass%.
(9) The chocolate composition according to any of (1) to (8), wherein the coffee beans contain arabica coffee beans.
(10) The chocolate composition according to any of (1) to (9), wherein the coffee beans have a degree of roast of from L16 to L32.
(11) The chocolate composition according to any of (1) to (10), wherein a content of cacao mass is less than 50 mass%.
(12) The chocolate composition according to any of (1) to (11), wherein the chocolate composition is a white chocolate.
(13) A method for producing a coffee-flavored chocolate composition, the method including:
   adjusting a content of ethyl acetate to from 5 to 1500 ppb and/or adjusting a content of phenethyl alcohol to from 5 to 1500 ppb; and
   adjusting a total content of kahweol palmitate and cafestol palmitate to from 700 to 7800 mg/kg.

### Advantageous Effects of Invention

According to the present invention, it is possible to obtain a delicious coffee-flavored chocolate composition with a good balance among bitterness, fruity aroma, and body feeling.

### Description of Embodiments

Unless otherwise noted, "ppb" used in the present specification means ppb by weight/weight (w/w).

### 1. Coffee-flavored chocolate composition

The present invention is, in one aspect, a coffee-flavored chocolate composition containing from 5 to 1500 ppb ethyl acetate and/or from 5 to 1500 ppb phenethyl alcohol, wherein a total content of kahweol palmitate and cafestol palmitate is from 700 to 7800 mg/kg. When the total amount of the content of ethyl acetate and/or phenethyl alcohol and the content of kahweol palmitate and cafestol palmitate is within the above range, a delicious coffee-flavored chocolate composition with a good balance among bitterness, fruity aroma, and body feeling can be obtained.

In the present specification, the "delicious coffee-flavored chocolate composition with a good balance among bitterness, fruity aroma, and body feeling" means a coffee-flavored chocolate composition in which the bitterness and the fruity aroma are felt and the body feeling is improved, and which is highly evaluated for overall tastiness.

### 1-1. Chocolate composition

The chocolate composition in the present invention includes chocolates and cocoa butter alternative oil and/or fat processed food products.

In the present specification, chocolates satisfy "The Fair Competition Code Concerning Labeling for Chocolates" based on Fair Trade Commission certification, and refer to those classified into chocolate, semi-chocolate, chocolate confectionery, semi-chocolate confectionery, and the like, according to the amount of cacao mass including cocoa powder, cocoa butter, and the like, and the amount of fat, milk solid, and moisture, and the chocolates include all of them. In the present invention, the content of cacao mass contained in chocolates is not particularly limited, and is preferably less than 50 mass%, more preferably 45 mass% or less, and still more preferably 40 mass% or less. In the present invention, the content of cocoa powder and cocoa butter contained in chocolates is also not particularly limited, and is preferably less than 50 mass%, more preferably 45 mass% or less, and still more preferably 40 mass% or less.

The chocolates are classified into dark chocolate containing no dairy product, milk chocolate containing a dairy product, and white chocolate using only cocoa butter as a component derived from cacao beans, depending on the difference in raw materials. In the present invention, although the chocolates may be any of dark chocolate, milk chocolate, and white chocolate, white chocolate using cocoa butter without using cacao mass or cocoa is preferable.

In the present invention, the type of the chocolates includes, but is not limited to, hard chocolates such as plate chocolates and soft chocolates such as chocolate cream. The hard chocolate is a solid chocolate having snap properties, and specific examples thereof include plate chocolate, enrober chocolate, shell chocolate, hollow chocolate, and panned chocolate. The soft chocolate is soft chocolate having a spreading property, and is used by being applied to, for example, bread. Specific examples thereof include a chocolate spread, chocolate for filling, and a chocolate cream.

In the present specification, the cocoa butter alternative oil and/or fat processed food product is a product obtained by substituting a part or all of cocoa butter in chocolates with cocoa butter alternative oil and/or fat. The content of the cocoa butter alternative oil and/or fat contained in the cocoa butter alternative oil and/or fat processed food product is not particularly limited, and is preferably less than 50 mass%, more preferably 45 mass% or less, and still more preferably 40 mass% or less. In the present invention, the content of cacao mass contained in the cocoa butter alternative oil and/or fat processed food product is also not particularly limited, and is preferably less than 50 mass%, more preferably 45 mass% or less, and still more preferably 40 mass% or less. In the present invention, the content of cocoa powder and cocoa butter contained in the cocoa butter alternative oil and/or fat processed food product is also not particularly limited, and is preferably less than 50 mass%, more preferably 45 mass% or less, and still more preferably 40 mass% or less.

In the cocoa butter alternative oil and/or fat processed food product in the present specification, vegetable oil and/or fat and the like can be appropriately included as necessary in addition to the cocoa butter alternative oil and/or fat.

Examples of the cocoa butter alternative oil and/or fat that can be used in the present invention include CBE (Cocoa butter equivalent), CBI (Cocoa butter improver), CBR (Cocoa butter replacer), CBS (Cocoa butter substitute), and oil and/or fat for filling.

The cocoa butter alternative oil and/or fat contains triglycerides of POS and SOS at a constant ratio. "POS" means triglyceride in which oleic acid is located at the sn-2 position of triglyceride, and palmitic acid and stearic acid are located at the sn-1, 3 positions, respectively; or in which stearic acid and palmitic acid are located. "SOS" means triglyceride in which oleic acid is located at the sn-2 position of triglyceride, and stearic acid is located at the sn-1, 3 positions. By using the cocoa butter alternative oil and/or fat having different ratios of POS and SOS, it is possible to flexibly adjust hardness at room temperature, meltability in the mouth, and the like.

### 1-2. Ethyl acetate

In one aspect, the chocolate composition of the present invention contains ethyl acetate. The lower limit value of the content of ethyl acetate in the chocolate composition of the present invention is 5 ppb, preferably 10 ppb or 15 ppb, and more preferably 20 ppb. In one aspect, the lower limit value of the content of ethyl acetate in the chocolate composition of the present invention may be 20 ppb, 40 ppb, 60 ppb, 80 ppb, or 100 ppb. In addition, the upper limit value of the content of ethyl acetate in the chocolate composition of the present invention is 1500 ppb, preferably 1300 ppb or 1100 ppb, and more preferably 1000 ppb. In one aspect, the upper limit value of the content of ethyl acetate in the chocolate composition of the present invention may be 800 ppb, 600 ppb, 500 ppb, 450 ppb, 400 ppb, 350 ppb, 300 ppb, 280 ppb, or 250 ppb. Typically, a content range of ethyl acetate in the chocolate composition of the present invention is from 5 to 1500 ppb, preferably from 10 to 1300 ppb, more preferably from 15 to 1100 ppb, and still more preferably from 20 to 1000 ppb. When the content of ethyl acetate in the chocolate composition is less than 5 ppb, the fruity aroma and the like cannot be sufficiently imparted, on the other hand, when the content of ethyl acetate is more than 1500 ppb, the fruity aroma becomes too strong as the chocolate composition, and thus the chocolate composition is not suitable for food.

In the present invention, the method for adjusting the content of ethyl acetate is not particularly limited, and any method can be used in combination if necessary. For example, the content of ethyl acetate in the chocolate composition may be adjusted by previously measuring the content of ethyl acetate contained in roasted coffee beans and a finely ground product thereof, and then blending the roasted coffee beans and the finely ground product thereof such that the content of ethyl acetate in the composition becomes a predetermined value. At that time, a plurality of finely ground products produced from a plurality of varieties of roasted coffee beans may be used in combination. In addition, the content of ethyl acetate in the chocolate composition may be adjusted using a fermented roasted coffee bean obtained by fermenting green coffee beans by a known method and then roasting the coffee beans or a finely ground product thereof.

In one aspect, ethyl acetate isolated from a natural product, artificially synthesized ethyl acetate, and the like can be used, and they may be combined to adjust the content of ethyl acetate in the chocolate composition.

The content of ethyl acetate can be measured by a known method, and can be measured by, for example, an HPLC method, an LC-MS method, a GC-MS method, an LC method, a GC method, or the like. In one aspect, the content of ethyl acetate is preferably measured by the GC-MS method.

For example, when the content of ethyl acetate is measured by the GC-MS method, the following method can be used.

### <Sample preparation>

1 g of a sample was mixed with 20 mL of water, 10 mL of hexane, and 8 g of sodium chloride, and the mixture was shaken for 10 minutes. The mixture was centrifuged at 2000 rpm for 5 minutes, and a hexane layer was extracted as a measurement sample. The provided sample was subjected to GC-MS measurement, and a quantitative value was calculated by an internal standard method. GC/MS measurement conditions of ethyl acetate were as follows.

### <Analytical conditions (GC-MS)>

Gas chromatograph: GC7890B (available from Agilent)
Mass analyzer: MSD5977 (available from Agilent)
Column: DB-WAX UI (available from Agilent), inner diameter: 0.25 mm, length: 60 m, film thickness: 0.5 µm
Injection method: Split 20:1
Temperature: 220°C at sample inlet
The column was maintained at 40°C for 3 min, then the temperature was raised at 15°C/min to 200°C and maintained for 5 min
Gas flow rate: hydrogen (carrier gas) 1.2 mL/min
Ion source temperature: 230°C
Ionization method: EI
Set mass number: m/z 88

### 1-3. Phenethyl alcohol

In one aspect, the chocolate composition of the present invention contains phenethyl alcohol. The lower limit value of the content of phenethyl alcohol in the chocolate composition of the present invention is 5 ppb, preferably 10 ppb or 15 ppb, and more preferably 20 ppb. In one aspect, the lower limit value of the content of phenethyl alcohol in the chocolate composition of the present invention may be 20 ppb, 40 ppb, 60 ppb, 80 ppb, or 100 ppb. In addition, the upper limit value of the content of phenethyl alcohol in the chocolate composition of the present invention is 1500 ppb, preferably 1300 ppb or 1100 ppb, and more preferably 1000 ppb. In one aspect, the upper limit value of the content of phenethyl alcohol in the chocolate composition of the present invention may be 800 ppb, 600 ppb, 500 ppb, 450 ppb, 400 ppb, 350 ppb, 300 ppb, 280 ppb, or 250 ppb. Typically, a content range of phenethyl alcohol in the chocolate composition of the present invention is from 5 to 1500 ppb, preferably from 10 to 1300 ppb, more preferably from 15 to 1100 ppb, and still more preferably from 20 to 1000 ppb. When the content of phenethyl alcohol in the chocolate composition is less than 5 ppb, the fruity aroma and the like cannot be sufficiently imparted, on the other hand, when the content of phenethyl alcohol is more than 1500 ppb, the fruity aroma becomes too strong as the chocolate composition, and thus the chocolate composition is not suitable for food.

In the present invention, the method for adjusting the content of phenethyl alcohol is not particularly limited, and any method can be used in combination if necessary. For example, the content of phenethyl alcohol in the chocolate composition may be adjusted by previously measuring the content of phenethyl alcohol contained in roasted coffee beans and a finely ground product thereof, and then blending the roasted coffee beans and the finely ground product thereof such that the content of phenethyl alcohol in the composition becomes a predetermined value. At that time, a plurality of finely ground products produced from a plurality of varieties of roasted coffee beans may be used in combination. In addition, the content of phenethyl alcohol in the chocolate composition may be adjusted using a fermented roasted coffee bean obtained by fermenting green coffee beans by a known method and then roasting the coffee beans or a finely ground product thereof.

In one aspect, phenethyl alcohol isolated from a natural product, artificially synthesized phenethyl alcohol, and the like can be used, and the content of phenethyl alcohol in the chocolate composition may be adjusted by combining them.

The content of phenethyl alcohol can be measured by a known method, and can be measured by, for example, an HPLC method, an LC-MS method, a GC-MS method, an LC method, a GC method, or the like. In one aspect, as described in Examples, the content of phenethyl alcohol is preferably measured by the GC-MS method.

For example, when the content of phenethyl alcohol is measured by the GC-MS method, the following method can be used.

### <Sample preparation>

1 g of a sample was mixed with 20 mL of water, 10 mL of diethyl ether, and 8 g of sodium chloride, and the mixture was shaken for 10 minutes. The mixture was centrifuged at 2000 rpm for 5 minutes, and a diethyl ether layer was extracted as a measurement sample. The provided sample was subjected to GC-MS measurement, and a quantitative value was calculated by an internal standard method. GC/MS measurement conditions of phenethyl alcohol were as follows.

### <Analytical conditions (GC-MS)>

Gas chromatograph: GC7890B (available from Agilent)
Mass analyzer: MSD5977 (available from Agilent)
Column: DB-WAX UI (available from Agilent), inner diameter: 0.25 mm, length: 60 m, film thickness: 0.5 µm
Injection method: pulsed split 5:1
Pulse pressure: 300 kPa
Pulse time: 2 min
Temperature: 220°C at sample inlet
The column was maintained at 60°C for 1 min, then the temperature was raised at 10°C/min to 220°C and maintained for 10 min
Gas flow rate: helium (carrier gas) 1 ml/min
Ion source temperature: 230°C
Ionization method: EI
Set mass number: m/z 91

### 1-4. Contents of kahweol palmitate and cafestol palmitate

The chocolate composition of the present invention contains kahweol palmitate and cafestol palmitate. The lower limit value of the total content [(X) + (Y)] of kahweol palmitate and cafestol palmitate in the chocolate composition of the present invention is 700 mg (700 mg/kg), preferably 1000 mg/kg, more preferably 1200 mg/kg, and still more preferably 1400 mg/kg per 1 kg of the chocolate composition. In one aspect, the lower limit value of the total content [(X) + (Y)] of kahweol palmitate and cafestol palmitate in the chocolate composition of the present invention may be 1600 mg/kg, 2000 mg/kg, 2500 mg/kg, or 3000 mg/kg. In addition, the upper limit value of the total content [(X) + (Y)] of kahweol palmitate and cafestol palmitate in the chocolate composition of the present invention is 7800 mg (7800 mg/kg), preferably 7500 mg/kg, more preferably 7300 mg/kg, and still more preferably 7200 mg/kg per 1 kg of the chocolate composition. In one aspect, the upper limit value of the total content [(X) + (Y)] of kahweol palmitate and cafestol palmitate in the chocolate composition of the present invention may be 6000 mg/kg, 5000 mg/kg, 4500 mg/kg, or 4000 mg/kg. Typically, a range of the total content [(X) + (Y)] of kahweol palmitate and cafestol palmitate in the chocolate composition of the present invention is from 700 to 7800 mg (from 700 to 7800 mg/kg), preferably from 1000 to 7500 mg/kg, more preferably from 1200 to 7300 mg/kg, and still more preferably from 1400 to 7200 mg/kg per 1 kg of the chocolate composition. When the total content of kahweol palmitate and cafestol palmitate is less than 700 mg/kg, the body feeling and the fruity aroma cannot be sufficiently imparted. When the total content of kahweol palmitate and cafestol palmitate is more than 7800 mg/kg, the bitterness is too strong.

The lower limit value of the content of kahweol palmitate in the chocolate composition of the present invention is not particularly limited, and is preferably 520 mg (520 mg/kg), more preferably 700 mg/kg, and still more preferably 900 mg/kg per 1 kg of the chocolate composition. The upper limit value of the content of kahweol palmitate in the chocolate composition of the present invention is not particularly limited, and is preferably 5700 mg (5700 mg/kg), more preferably 5400 mg/kg, and still more preferably 5200 mg/kg per 1 kg of the chocolate composition. In one aspect, the upper limit value of the content of kahweol palmitate in the chocolate composition of the present invention may be 5000 mg/kg, 4000 mg/kg, 3500 mg/kg, or 3000 mg/kg. Typically, the content range of kahweol palmitate in the chocolate composition of the present invention is not particularly limited, and is preferably from 520 to 5700 mg (from 520 to 5700 mg/kg), more preferably from 700 to 5400 mg/kg, and still more preferably from 900 to 5200 mg/kg per 1 kg of the chocolate composition.

The lower limit value of the content of cafestol palmitate in the chocolate composition of the present invention is not particularly limited, and is preferably 180 mg (180 mg/kg), more preferably 300 mg/kg, and still more preferably 400 mg/kg per 1 kg of the chocolate composition. The upper limit value of the content of cafestol palmitate in the chocolate composition of the present invention is not particularly limited, and is preferably 2100 mg (2100 mg/kg), more preferably 2050 mg/kg, and still more preferably 2020 mg/kg per 1 kg of the chocolate composition. In one aspect, the upper limit value of the content of kahweol palmitate in the chocolate composition of the present invention may be 1700 mg/kg, 1400 mg/kg, 1100 mg/kg, or 1000 mg/kg. Typically, the content range of cafestol palmitate in the chocolate composition of the present invention is not particularly limited, and is preferably from 180 to 2100 mg (from 180 to 2100 mg/kg), more preferably from 300 to 2050 mg/kg, and still more preferably from 400 to 2020 mg/kg per 1 kg of the chocolate composition.

In order to contain kahweol palmitate and cafestol palmitate in the chocolate composition to adjust the content of kahweol palmitate and the content of cafestol palmitate to predetermined ranges, for example, a raw material containing kahweol palmitate and cafestol palmitate may be used in the chocolate composition, and the type of raw material is not particularly limited. In order to contain kahweol palmitate and cafestol palmitate in the chocolate composition, isolated or synthesized kahweol palmitate and cafestol palmitate and the like can be used, and a combination thereof may be used. In the present invention, the content of kahweol palmitate and the content of cafestol palmitate in the roasted coffee beans may be measured in advance, and then the roasted coffee beans may be blended so that the content of kahweol palmitate and the content of cafestol palmitate in the chocolate composition become predetermined contents to adjust the content of kahweol palmitate and the content of cafestol palmitate in the chocolate composition. At that time, a plurality of varieties of roasted coffee beans and finely ground products thereof may be used in combination.

The content of kahweol palmitate and the content of cafestol palmitate can be quantified using a known method such as an LC-MS/MS method. For example, the content can be measured by the method described in Examples described later.

### 1-5. Finely ground product of roasted coffee beans

In the present specification, the "finely ground product of roasted coffee beans" refers to a product obtained by finely grinding roasted coffee beans. The chocolate composition of the present invention may be produced by adding a finely ground product of roasted coffee beans to a raw material, or may be produced by subjecting the raw material containing the roasted coffee beans to a finely grinding treatment. Here, the "roasted coffee beans" are green coffee beans subjected to heat treatment called roasting. The roasting chemically changes the components contained in the green coffee beans to produce a coffee flavor (strong fragrance or flavor).

In the present invention, as long as the content of ethyl acetate and/or phenethyl alcohol and the content of kahweol palmitate and cafestol palmitate can be set within a predetermined range, the type of coffee beans to be used in the finely ground product of roasted coffee beans is not limited, and although any of arabica type, robusta type, liberica type, and the like can be used, the arabica type is one example of a preferred embodiment. In the present invention, a plurality of varieties of coffee beans can be used in combination.

The content of the finely ground product of roasted coffee beans in the chocolate composition of the present invention is not particularly limited, and is preferably from 4 to 38 mass%, from 6 to 35 mass%, from 7 to 32 mass%, and from 7.5 to 30 mass%, more preferably from 11 to 27 mass%, and still more preferably from 11 to 19 mass%.

In the present invention, a roasting method and roasting conditions of the coffee beans used for the finely ground product of roasted coffee beans are not particularly limited. For example, in a method such as a direct heat method, a hot air method, a semi-hot air method, a char-grill method, a far-infrared method, a microwave method or a superheated steam method, an apparatus such as a horizontal (lateral) drum type, a vertical (longitudinal) drum type, a vertically rotating bowl type, a fluidized bed type and a pressurization type may be used, and coffee beans may be finished at a degree of roast (light, cinnamon, medium, high, city, full-city, French, Italian) suited to the predetermined purpose depending on the type of beans. The roasting temperature is also not particularly limited, and a preferable roasting temperature is from 100 to 300°C, more preferably from 150 to 250°C, and particularly preferably from 170 to 220°C. In addition, the roasting time is not particularly limited, and is preferably from 5 to 30 minutes, more preferably from 10 to 25 minutes, and particularly preferably from 15 to 20 minutes.

In the present invention, the degree of roast is also not particularly limited, and coffee beans are roasted so that the degree of roast is preferably from 10 to 40, more preferably from 15 to 35, and particularly preferably from 16 to 32 in the L value measured by a color difference meter as an index. For the measurement of the degree of roast, ground beans are introduced into a cell and thoroughly tapped to measure the degree of roast by a spectro color meter. SE-2000 available from Nippon Denshoku Industries, Co., Ltd. and the like may be used as the spectro color meter.

The chocolate composition of the present invention can also include the finely ground product of roasted coffee beans produced by finely grinding the roasted coffee beans described above. The chocolate composition of the present invention may be produced by finely grinding a raw material containing roasted coffee beans. The content of ethyl acetate and/or phenethyl alcohol and the content of kahweol palmitate and cafestol palmitate may be adjusted by blending the finely ground product of roasted coffee beans. The median diameter of the finely ground product of roasted coffee beans contained in the chocolate composition of the present invention is not particularly limited, and is preferably from 5 to 50 µm, more preferably from 5 to 40 µm, still more preferably from 6 to 30 µm, and particularly preferably from 7 to 20 µm. When the chocolate composition contains the finely ground product of roasted coffee beans having a median diameter exceeding 50 µm, a feeling of strangeness of texture such as mouth-feel and food texture may occur.

The method for the finely grinding treatment of the roasted coffee beans and the method for the finely grinding treatment when producing the chocolate composition are not particularly limited as long as the median diameter of the finely ground product of roasted coffee beans contained in the chocolate composition can be from 5 to 50 µm, and a known method can be used. For example, in the finely grinding treatment of the roasted coffee beans, a dry grinding method, a freeze grinding method, or the like can be used. In the finely grinding treatment in the production of the chocolate composition, a dry grinding method can be mainly used.

In a particle diameter, a large number of measurement results are generally represented as a distribution of existence ratios for each particle diameter, and this is referred to as a particle diameter distribution. The existence ratio is based on a volume, a number, or the like, and in the present specification, the existence ratio is represented by the existence ratio on a volume basis, and the existence ratio can be measured by a measuring device based on a laser diffraction/scattering method. An example of the measuring device is a Microtrac particle size distribution measuring device (available from Nikkiso Co., Ltd.). In the present specification, the particle diameter of the finely ground product of the roasted coffee bean is represented by a median diameter, and the median diameter is a 50% diameter of cumulative data of the particle diameter, and is a diameter in which when the powder is divided into two from a certain particle diameter, the larger side and the smaller side are equal in amount.

### 1-6. Other components

In addition to the above components, sweeteners (for example, glucose, fructose, galactose, sucrose (sugar), lactose, maltose, trehalose, oligosaccharides, sugar alcohols, non-carbohydrate natural sweeteners, and synthetic sweeteners), emulsifiers (for example, lecithin), oils and/or fats (for example, cocoa butter substitute fat), dairy products (for example, whole fat dry milk and non-fat dry milk), antioxidants, fragrances, preservatives, quality stabilizers, and the like can be appropriately blended in the chocolate composition of the present invention as long as the effects of the present invention are not impaired.

### 2. Method for producing chocolate composition

In one aspect, the present invention is a method for producing a coffee-flavored chocolate composition, including the steps of: a) adjusting the content of ethyl acetate to from 5 to 1500 ppb and/or adjusting the content of phenethyl alcohol to from 5 to 1500 ppb; and b) adjusting the total content of kahweol palmitate and cafestol palmitate to from 700 to 7800 mg/kg. This makes it possible to obtain a coffee-flavored chocolate composition in which the body feeling of coffee is felt and the fruity aroma is enhanced. That is, in one aspect, the present invention is also a method for enhancing the fruity aroma while enhancing the body feeling of coffee in the coffee-flavored chocolate composition.

In the method for producing a chocolate composition, roasted coffee beans, fermented roasted coffee beans, or a finely ground product thereof are produced, the content of ethyl acetate and/or phenethyl alcohol in the roasted coffee beans and the finely ground product thereof and the content of kahweol palmitate and cafestol palmitate are measured in advance, then the roasted coffee beans and the finely ground product thereof are blended so that the content of each component becomes a predetermined content, and the contents of ethyl acetate, phenethyl alcohol, kahweol palmitate, and cafestol palmitate in the chocolate composition can be adjusted. At that time, a plurality of finely ground products produced from a plurality of varieties of roasted coffee beans may be blended to adjust the contents of ethyl acetate, phenethyl alcohol, kahweol palmitate, and cafestol palmitate in the chocolate composition. In addition to blending the roasted coffee beans and the finely ground product thereof, ethyl acetate and/or phenethyl alcohol isolated from plants, artificially synthesized ethyl acetate and/or phenethyl alcohol, or a combination thereof can be blended to adjust the amount of ethyl acetate and/or phenethyl alcohol in the chocolate composition to a predetermined content. The content of kahweol palmitate and the content of cafestol palmitate can also be adjusted not only by blending the roasted coffee beans and the finely ground product thereof, but also by using the isolated kahweol palmitate and cafestol palmitate, the synthesized kahweol palmitate and cafestol palmitate, or a combination thereof. In the method for producing a chocolate composition, the content range of ethyl acetate and/or phenethyl alcohol is as described in "1. Coffee-flavored chocolate composition". In addition, the content of kahweol palmitate, the content of cafestol palmitate, and the total amount and ratio thereof are also as described in "1. Coffee-flavored chocolate composition".

In the method for producing a chocolate composition, the content of ethyl acetate, the content of phenethyl alcohol, the content of kahweol palmitate, and the content of cafestol palmitate may be adjusted by blending a finely ground product of roasted coffee beans having a median diameter of from 5 to 50 µm or a finely ground product of fermented roasted coffee beans having a median diameter of from 5 to 50 µm. The method for producing a chocolate composition may further include a step of roasting coffee beans and a step of finely grinding the roasted coffee beans. The kind of the roasted coffee beans, the roasting method, the finely grinding method, the particle diameter of the finely ground product, and the like are as described in "1. Coffee-flavored chocolate composition". The kind of the roasted coffee beans, the roasting method, the finely grinding method, the particle diameter of the finely ground product, and the like are as described in "1. Coffee-flavored chocolate composition".

The type of chocolate composition produced by the above method is as described in "1. Coffee-flavored chocolate composition", is not particularly limited, and is preferably a chocolate composition having a cocoa butter content of preferably less than 50 mass%, more preferably 45 mass% or less, and still more preferably 40 mass% or less. In an aspect, the chocolate composition produced by the method is preferably a white chocolate using cocoa butter without using cacao mass or cocoa.

### Examples

Hereinafter, the present invention will be described in more detail with reference to specific experimental examples, but the present invention is not limited to the following experimental examples.

### Experiment 1: Production of base blended coffee bean

Roasted coffee beans having three different degrees of roast were produced using a coffee roasting machine (TMR660, available from Petroncini) using green coffee beans (Brazilian, arabica type) as a raw material. The roasting conditions and the degree of roast (L value) of each roasted coffee bean are as follows.
(1) Light-roasted coffee beans: L value = 28; finished baking temperature 190°C; roasting time: 5 minutes
(2) Medium-roasted coffee beans: L value = 23; finished baking temperature 210°C; roasting time: 6 minutes 30 seconds
(3) Dark-roasted coffee beans: L value = 20; finished baking temperature 235°C; roasting time: 9 minutes

Each of the produced roasted coffee beans was mixed at the following blending ratio to obtain a base blend.

**[Table 1]**

| Coffee bean | L value | Blending ratio |
|---|---|---|
| Light-roasted | 28.0 | 50.00 |
| Medium-roasted | 23.0 | 25.00 |
| Dark-roasted | 20.0 | 25.00 |

| | | |
|---|---|---|
| (Average L value = 23.5) | | |

The base blend was ground to have a median diameter of 10 µm or less by a freeze grinding method described in JP 2015-73462 A using a freeze grinding system 100 (Linrex mill available from Liquid Gas Co., Ltd.). Specifically, a freeze-grinding step of directly freezing the washed roasted coffee beans by liquid nitrogen, and finely grinding the frozen coffee beans in an atmosphere maintained at from -110°C to -180°C until cell walls of the coffee beans were broken was executed to produce base blended coffee beans having a median diameter of 10 µm or less.

Green coffee beans (arabica type) containing phenethyl alcohol were roasted in the same manner as described above using a coffee roasting machine (TMR660, available from Petroncini) (L value = 23; finished baking temperature 210°C; roasting time 6 minutes and 30 seconds). Thereafter, a finely ground product of roasted coffee beans having a median diameter of 10 µm or less was produced in the same manner as in the base blend described above.

### Experiment 2: Production of chocolate composition

Each chocolate composition as a sample was produced with the composition of Tables 2 to 3 using the following raw material (Samples 1 to 12: ethyl acetate-containing sample chocolate, Samples 13 to 25: phenethyl alcohol-containing sample chocolate). For ethyl acetate or phenethyl alcohol, a solution obtained by dissolving each of ethyl acetate and phenethyl alcohol in water at a high concentration was provided, and blended by adjusting the content of water in sample chocolate to be produced to 0.1% and the content of ethyl acetate or phenethyl alcohol to a final concentration shown in Tables 2 to 3. Since the content of ethyl acetate and phenethyl alcohol is as small as from 2 to 2000 ppb, a weight ratio of the two components to the entire sample chocolate can be ignored.
- Base blended coffee beans: see Experiment 1
- Ethyl acetate: FUJIFILM Wako Pure Chemical Corporation (purity of 99.5% or more)
- Phenethyl alcohol: NACALAI TESQUE, INC. (purity of 98% or more)
- Cocoa butter: available from Cargill, Incorporated
- Sugar: available from ITOCHU SUGAR CO., LTD.
- Lactose: available from Lacto Japan Co., Ltd.
- Lecithin: available from ADM

Sample 19 was produced by blending the finely ground product of roasted coffee beans derived from green coffee beans containing phenethyl alcohol described above, and phenethyl alcohol was not additionally blended. The content of phenethyl alcohol contained in Sample 19 was analyzed using the sample preparation method and the GC-MS analysis conditions described above.

**[Table 2]**

| <Ethyl acetate-containing sample chocolate> | | | | | | | | | |
|---|---|---|---|---|---|---|---|---|---|
| Sample No. | Base blended bean (mass%) | Cocoa butter (mass%) | Sugar (mass%) | Lactose (mass%) | Lecithin (mass%) | Water (mass%) | Ethyl acetate (final concentration) (ppb) | Total (mass%) | Degree of sweetness |
| 1 | 15.0 | 36.0 | 15.0 | 33.6 | 0.3 | 0.1 | 2000 | 100.0 | 20.4 |
| 2 | 3.5 | 36.0 | 13.0 | 47.1 | 0.3 | 0.1 | 1000 | 100.0 | 20.5 |
| 3 | 3.5 | 36.0 | 13.0 | 47.1 | 0.3 | 0.1 | 20 | 100.0 | 20.5 |
| 4 | 7.0 | 36.0 | 14.0 | 42.6 | 0.3 | 0.1 | 1000 | 100.0 | 20.8 |
| 5 | 7.0 | 36.0 | 14.0 | 42.6 | 0.3 | 0.1 | 20 | 100.0 | 20.8 |
| 6 | 15.0 | 36.0 | 15.0 | 33.6 | 0.3 | 0.1 | 1000 | 100.0 | 20.4 |
| 7 | 15.0 | 36.0 | 15.0 | 33.6 | 0.3 | 0.1 | 20 | 100.0 | 20.4 |
| 8 | 15.0 | 36.0 | 15.0 | 33.6 | 0.3 | 0.1 | 2 | 100.0 | 20.4 |
| 9 | 30.0 | 36.0 | 18.0 | 15.6 | 0.3 | 0.1 | 1000 | 100.0 | 20.5 |
| 10 | 30.0 | 36.0 | 18.0 | 15.6 | 0.3 | 0.1 | 20 | 100.0 | 20.5 |
| 11 | 40.0 | 36.0 | 20.0 | 3.6 | 0.3 | 0.1 | 1000 | 100.0 | 20.6 |
| 12 | 40.0 | 36.0 | 20.0 | 3.6 | 0.3 | 0.1 | 20 | 100.0 | 20.6 |

**[Table 3]**

| <Phenethyl alcohol-containing sample chocolate> | | | | | | | | | |
|---|---|---|---|---|---|---|---|---|---|
| Sample No. | Base blended bean (mass%) | Cocoa butter (mass%) | Sugar (mass%) | Lactose (mass%) | Lecithin (mass%) | Water (mass%) | Phenethyl alcohol (final concentration) (ppb) | Total (mass%) | Degree of sweetness |
| 13 | 15.0 | 36.0 | 15.0 | 33.6 | 0.3 | 0.1 | 2000 | 100.0 | 20.4 |
| 14 | 3.5 | 36.0 | 13.0 | 47.1 | 0.3 | 0.1 | 1000 | 100.0 | 20.5 |
| 15 | 3.5 | 36.0 | 13.0 | 47.1 | 0.3 | 0.1 | 20 | 100.0 | 20.5 |
| 16 | 7.0 | 36.0 | 14.0 | 42.6 | 0.3 | 0.1 | 1000 | 100.0 | 20.8 |
| 17 | 7.0 | 36.0 | 14.0 | 42.6 | 0.3 | 0.1 | 20 | 100.0 | 20.8 |
| 18 | 15.0 | 36.0 | 15.0 | 33.6 | 0.3 | 0.1 | 1000 | 100.0 | 20.4 |
| 19 | 15.0 | 36.0 | 15.0 | 33.6 | 0.3 | 0.1 | 200 | 100.0 | 20.4 |
| 20 | 15.0 | 36.0 | 15.0 | 33.6 | 0.3 | 0.1 | 20 | 100.0 | 20.4 |
| 21 | 15.0 | 36.0 | 15.0 | 33.6 | 0.3 | 0.1 | 2 | 100.0 | 20.4 |
| 22 | 30.0 | 36.0 | 18.0 | 15.6 | 0.3 | 0.1 | 1000 | 100.0 | 20.5 |
| 23 | 30.0 | 36.0 | 18.0 | 15.6 | 0.3 | 0.1 | 20 | 100.0 | 20.5 |
| 24 | 40.0 | 36.0 | 20.0 | 3.6 | 0.3 | 0.1 | 1000 | 100.0 | 20.6 |
| 25 | 40.0 | 36.0 | 20.0 | 3.6 | 0.3 | 0.1 | 20 | 100.0 | 20.6 |

A chocolate dough obtained by blending each raw material with the above composition was placed in a thermostatic chamber set at 50°C, and mixed with a stirrer for 30 minutes. Thereafter, the mixture was subjected to temperature adjustment (tempering) at 32°C for 10 minutes, filled in a container having a longitudinal width of 40 mm, a lateral width of 30 mm, and a thickness of 10 mm, molded, and allowed to stand in a dark place for 16 hours to obtain a chocolate composition.

As for the content of kahweol palmitate and the content of cafestol palmitate in the sample chocolate, 0.2 g of each sample added with 800 µL of Milli-Q water was used as a sample, and kahweol palmitate and cafestol palmitate were extracted using the Folch method. The Folch method was performed by the method described above. Using the obtained sample for LC-MS/MS measurement, the content of kahweol palmitate and the content of cafestol palmitate in each sample were measured by the method described later.

### <Analytical conditions of kahweol palmitate and cafestol palmitate (LC-MS/MS)>

[Used model]
   - MS: 4000Q TRAP (available from AB Sciex Pte. Ltd.)
   - LC: UFLC XR (available from Shimadzu Corporation)
[LC conditions]
   - Mobile phase: (A) 0.1% formic acid aqueous solution, (B) ethanol
   - Flow rate: 0.35 ml/min
   - Gradient conditions: 4 min. (B: 87%) - 4.05 min. (100%)
   - Column: Phenomenex Kinetexv C18 1.3 µm 2.1 × 50 mm
   - Column temperature: 45°C
   - Introduction amount: 2 µl
[MS conditions]
   - Full MS, Runtime 1-5min. Positive
[Quantitative method]
   - Standard addition method
   - kahweol palmitate: 535.410 → 279.170 (Q1 → Q3)
   - Cafestol palmitate: 567.440 → 281.190 (Q1 → Q3)
   - DP: 95 V
   - EP: 10 V
   - CE: 21 V
   - CXP: 12 V

A kahweol palmitate standard product (available from Santa Cruz Biotechnology, Inc.) and a cafestol palmitate standard product (available from Santa Cruz Biotechnology, Inc.) were used under the above conditions.

Tables 4 and 5 show the contents of ethyl acetate, phenethyl alcohol, kahweol palmitate, and cafestol palmitate, and the total content of kahweol palmitate and cafestol palmitate in each sample chocolate.

**[Table 4]**

| Sample No. | Ethyl acetate (ppb) | kahweol palmitate (mg/kg) | Cafestol palmitate (mg/kg) | kahweol palmitate + cafestol palmitate (mg/kg) |
|---|---|---|---|---|
| 1 | 2000 | 2540 | 919 | 3459 |
| 2 | 1000 | 499 | 169 | 668 |
| 3 | 20 | 499 | 169 | 668 |
| 4 | 1000 | 987 | 462 | 1449 |
| 5 | 20 | 987 | 462 | 1449 |
| 6 | 1000 | 2540 | 919 | 3459 |
| 7 | 20 | 2540 | 919 | 3459 |
| 8 | 2 | 2540 | 919 | 3459 |
| 9 | 1000 | 5180 | 2010 | 7190 |
| 10 | 20 | 5180 | 2010 | 7190 |
| 11 | 1000 | 5850 | 2120 | 7970 |
| 12 | 20 | 5850 | 2120 | 7970 |

**[Table 5]**

| Sample No. | Phenethyl alcohol (ppb) | kahweol palmitate (mg/kg) | Cafestol palmitate (mg/kg) | kahweol palmitate + cafestol palmitate (mg/kg) |
|---|---|---|---|---|
| 13 | 2000 | 2540 | 919 | 3459 |
| 14 | 1000 | 499 | 169 | 668 |
| 15 | 20 | 499 | 169 | 668 |
| 16 | 1000 | 987 | 462 | 1449 |
| 17 | 20 | 987 | 462 | 1449 |
| 18 | 1000 | 2540 | 919 | 3459 |
| 19 | 200 | 2540 | 919 | 3459 |
| 20 | 20 | 2540 | 919 | 3459 |
| 21 | 2 | 2540 | 919 | 3459 |
| 22 | 1000 | 5180 | 2010 | 7190 |
| 23 | 20 | 5180 | 2010 | 7190 |
| 24 | 1000 | 5850 | 2120 | 7970 |
| 25 | 20 | 5850 | 2120 | 7970 |

Next, sensory evaluation was performed by expert panelists (six panelists) for each sample chocolate produced. In the sensory evaluation, the expert panelists ate 14 g of each sample chocolate, and evaluated the bitterness, the body feeling, the fruity aroma, and the overall tastiness in five stages.

### <Evaluation criteria: bitterness>

5 points: bitterness is slightly too strong
4 points: good bitterness is strongly perceived
3 points: good bitterness is slightly strongly perceived
2 points: good bitterness is perceived
1 point: less bitterness is perceived.

* A sample with from 1.7 to 4.5 points was evaluated as preferable for the "bitterness".

### <Evaluation criteria: body feeling>

5 points: strongly perceived
4 points: perceived
3 points: slightly perceived
2 points: not perceived much
1 point: not perceived

* A sample with 2.8 or more points was evaluated as preferable for the "body feeling".

### <Evaluation criteria: fruity aroma>

5 points: strongly perceived
4 points: perceived
3 points: slightly perceived
2 points: not perceived much
1 point: not perceived

* A sample with from 1.7 to 4.3 points was evaluated as preferable for the "fruity aroma".

### <Evaluation criteria: overall evaluation (overall tastiness)>

5 points: very good
4 points: good
3 points: slightly good
2 points: slightly poor
1 point: not good

* A sample with 4 or more points was evaluated as preferable for the "overall evaluation (overall tastiness)".

Tables 6 to 13 indicate results of the evaluation. As shown in Tables 6 to 13, it has been found that by adjusting the content of ethyl acetate or phenethyl alcohol and the contents of kahweol palmitate and cafestol palmitate within the scope of the present invention, a delicious chocolate composition having a balance of the fruity aroma in addition to the bitterness and the body feeling can be obtained.

### <Sensory evaluation result of ethyl acetate-containing sample chocolate>

**[Table 6]**

| Bitterness | | | | | | | |
|---|---|---|---|---|---|---|---|
| Sample No. | Panelist No. | | | | | | Average |
| | 1 | 2 | 3 | 4 | 5 | 6 | |
| 1 | 4 | 3 | 3 | 5 | 4 | 4 | 3.8 |
| 2 | 1 | 1 | 2 | 1 | 2 | 1 | 1.3 |
| 3 | 1 | 1 | 2 | 1 | 2 | 1 | 1.3 |
| 4 | 2 | 2 | 3 | 1 | 3 | 2 | 2.2 |
| 5 | 2 | 2 | 3 | 2 | 3 | 2 | 2.3 |
| 6 | 3 | 3 | 4 | 3 | 4 | 4 | 3.5 |
| 7 | 3 | 3 | 4 | 3 | 4 | 4 | 3.5 |
| 8 | 3 | 4 | 4 | 3 | 4 | 4 | 3.7 |
| 9 | 4 | 4 | 4 | 4 | 5 | 4 | 4.2 |
| 10 | 5 | 4 | 4 | 4 | 5 | 4 | 4.3 |
| 11 | 5 | 5 | 5 | 4 | 5 | 5 | 4.8 |
| 12 | 5 | 5 | 5 | 4 | 5 | 5 | 4.8 |

**[Table 7]**

| Body feeling | | | | | | | |
|---|---|---|---|---|---|---|---|
| Sample No. | Panelist No. | | | | | | Average |
| | 1 | 2 | 3 | 4 | 5 | 6 | |
| 1 | 4 | 4 | 3 | 4 | 2 | 5 | 3.7 |
| 2 | 3 | 3 | 3 | 3 | 2 | 1 | 2.5 |
| 3 | 2 | 2 | 2 | 2 | 1 | 1 | 1.7 |
| 4 | 3 | 3 | 4 | 4 | 2 | 4 | 3.3 |
| 5 | 3 | 3 | 4 | 4 | 1 | 2 | 2.8 |
| 6 | 4 | 4 | 4 | 4 | 3 | 5 | 4.0 |
| 7 | 3 | 4 | 4 | 4 | 3 | 4 | 3.7 |
| 8 | 3 | 3 | 4 | 4 | 3 | 4 | 3.5 |
| 9 | 5 | 4 | 4 | 4 | 4 | 4 | 4.2 |
| 10 | 4 | 4 | 4 | 4 | 4 | 4 | 4.0 |
| 11 | 5 | 5 | 5 | 5 | 5 | 5 | 5.0 |
| 12 | 5 | 4 | 5 | 4 | 5 | 5 | 4.7 |

**[Table 8]**

| Fruity aroma | | | | | | | |
|---|---|---|---|---|---|---|---|
| Sample No. | Panelist No. | | | | | | Average |
| | 1 | 2 | 3 | 4 | 5 | 6 | |
| 1 | 4 | 5 | 4 | 5 | 5 | 5 | 4.7 |
| 2 | 3 | 3 | 3 | 5 | 4 | 5 | 3.8 |
| 3 | 2 | 1 | 1 | 2 | 2 | 1 | 1.5 |
| 4 | 4 | 4 | 4 | 5 | 4 | 4 | 4.2 |
| 5 | 3 | 2 | 1 | 2 | 2 | 2 | 2.0 |
| 6 | 4 | 4 | 3 | 5 | 4 | 4 | 4.0 |
| 7 | 2 | 2 | 2 | 2 | 3 | 2 | 2.2 |
| 8 | 1 | 1 | 2 | 1 | 2 | 1 | 1.3 |
| 9 | 4 | 4 | 4 | 4 | 3 | 4 | 3.8 |
| 10 | 2 | 2 | 2 | 1 | 2 | 1 | 1.7 |
| 11 | 3 | 4 | 4 | 4 | 3 | 3 | 3.5 |
| 12 | 1 | 2 | 2 | 1 | 2 | 1 | 1.5 |

**[Table 9]**

| Overall evaluation | | | | | | | |
|---|---|---|---|---|---|---|---|
| Sample No. | Panelist No. | | | | | | Average |
| | 1 | 2 | 3 | 4 | 5 | 6 | |
| 1 | 4 | 2 | 4 | 4 | 4 | 1 | 3.2 |
| 2 | 2 | 1 | 4 | 1 | 2 | 1 | 1.8 |
| 3 | 1 | 1 | 4 | 1 | 2 | 1 | 1.7 |
| 4 | 3 | 5 | 4 | 5 | 5 | 3 | 4.2 |
| 5 | 4 | 5 | 4 | 5 | 5 | 4 | 4.5 |
| 6 | 4 | 5 | 4 | 5 | 5 | 4 | 4.5 |
| 7 | 5 | 5 | 4 | 5 | 5 | 4 | 4.7 |
| 8 | 4 | 4 | 4 | 3 | 3 | 4 | 3.7 |
| 9 | 4 | 5 | 4 | 5 | 5 | 4 | 4.5 |
| 10 | 5 | 5 | 4 | 5 | 5 | 4 | 4.7 |
| 11 | 3 | 5 | 4 | 5 | 2 | 3 | 3.7 |
| 12 | 4 | 5 | 4 | 5 | 2 | 3 | 3.8 |

### <Sensory evaluation results of phenethyl alcohol-containing sample chocolate>

**[Table 10]**

| Bitterness | | | | | | | |
|---|---|---|---|---|---|---|---|
| Sample No. | Panelist No. | | | | | | Average |
| | 1 | 2 | 3 | 4 | 5 | 6 | |
| 13 | 3 | 4 | 4 | 4 | 3 | 3 | 3.5 |
| 14 | 1 | 1 | 1 | 2 | 2 | 1 | 1.3 |
| 15 | 1 | 1 | 1 | 2 | 1 | 1 | 1.2 |
| 16 | 2 | 2 | 1 | 2 | 1 | 2 | 1.7 |
| 17 | 2 | 2 | 2 | 2 | 1 | 2 | 1.8 |
| 18 | 3 | 4 | 4 | 4 | 4 | 3 | 3.7 |
| 19 | 3 | 3 | 4 | 4 | 4 | 3 | 3.5 |
| 20 | 3 | 3 | 5 | 4 | 4 | 3 | 3.7 |
| 21 | 3 | 4 | 4 | 4 | 4 | 4 | 3.8 |
| 22 | 4 | 4 | 4 | 5 | 4 | 4 | 4.2 |
| 23 | 4 | 5 | 4 | 4 | 4 | 4 | 4.2 |
| 24 | 5 | 5 | 5 | 5 | 5 | 5 | 5.0 |
| 25 | 5 | 5 | 4 | 5 | 5 | 5 | 4.8 |

**[Table 11]**

| Body feeling | | | | | | | |
|---|---|---|---|---|---|---|---|
| Sample No. | Panelist No. | | | | | | Average |
| | 1 | 2 | 3 | 4 | 5 | 6 | |
| 13 | 5 | 5 | 5 | 5 | 5 | 4 | 4.8 |
| 14 | 2 | 3 | 3 | 2 | 3 | 1 | 2.3 |
| 15 | 1 | 1 | 1 | 2 | 2 | 3 | 1.7 |
| 16 | 4 | 3 | 3 | 4 | 3 | 4 | 3.5 |
| 17 | 3 | 3 | 3 | 4 | 3 | 4 | 3.3 |
| 18 | 4 | 5 | 5 | 5 | 4 | 4 | 4.5 |
| 19 | 4 | 5 | 4 | 5 | 4 | 4 | 4.3 |
| 20 | 4 | 4 | 4 | 4 | 4 | 4 | 4.0 |
| 21 | 3 | 3 | 4 | 4 | 4 | 3 | 3.5 |
| 22 | 4 | 5 | 5 | 4 | 5 | 4 | 4.5 |
| 23 | 5 | 5 | 5 | 4 | 4 | 3 | 4.3 |
| 24 | 5 | 5 | 4 | 5 | 5 | 5 | 4.8 |
| 25 | 5 | 5 | 4 | 5 | 5 | 5 | 4.8 |

**[Table 12]**

| Fruity aroma | | | | | | | |
|---|---|---|---|---|---|---|---|
| Sample No. | Panelist No. | | | | | | Average |
| | 1 | 2 | 3 | 4 | 5 | 6 | |
| 13 | 5 | 5 | 4 | 4 | 4 | 5 | 4.5 |
| 14 | 4 | 3 | 3 | 4 | 3 | 3 | 3.3 |
| 15 | 2 | 1 | 1 | 3 | 1 | 3 | 1.8 |
| 16 | 4 | 3 | 4 | 4 | 3 | 4 | 3.7 |
| 17 | 2 | 3 | 3 | 3 | 3 | 4 | 3.0 |
| 18 | 4 | 4 | 4 | 4 | 4 | 4 | 4.0 |
| 19 | 4 | 3 | 3 | 4 | 2 | 3 | 3.2 |
| 20 | 2 | 3 | 2 | 3 | 2 | 3 | 2.5 |
| 21 | 1 | 1 | 1 | 1 | 1 | 1 | 1.0 |
| 22 | 4 | 3 | 4 | 4 | 3 | 4 | 3.7 |
| 23 | 2 | 1 | 3 | 4 | 1 | 2 | 2.2 |
| 24 | 3 | 3 | 4 | 3 | 4 | 4 | 3.5 |
| 25 | 2 | 1 | 2 | 1 | 2 | 4 | 2.0 |

**[Table 13]**

| Overall evaluation | | | | | | | |
|---|---|---|---|---|---|---|---|
| Sample No. | Panelist No. | | | | | | Average |
| | 1 | 2 | 3 | 4 | 5 | 6 | |
| 13 | 2 | 3 | 4 | 3 | 4 | 3 | 3.2 |
| 14 | 2 | 2 | 3 | 3 | 2 | 2 | 2.3 |
| 15 | 2 | 1 | 1 | 2 | 2 | 3 | 1.8 |
| 16 | 4 | 5 | 4 | 5 | 4 | 4 | 4.3 |
| 17 | 3 | 4 | 5 | 4 | 4 | 4 | 4.0 |
| 18 | 5 | 5 | 5 | 5 | 4 | 4 | 4.7 |
| 19 | 5 | 4 | 5 | 4 | 4 | 5 | 4.5 |
| 20 | 4 | 4 | 5 | 5 | 4 | 4 | 4.3 |
| 21 | 3 | 3 | 5 | 4 | 4 | 4 | 3.8 |
| 22 | 5 | 4 | 4 | 4 | 4 | 4 | 4.2 |
| 23 | 5 | 4 | 4 | 5 | 4 | 4 | 4.3 |
| 24 | 4 | 3 | 3 | 4 | 3 | 4 | 3.5 |
| 25 | 4 | 3 | 4 | 3 | 3 | 4 | 3.5 |

### Industrial Applicability

The present invention relates to a new means for providing a delicious coffee-flavored chocolate composition with a good balance among bitterness, fruity aroma, and body feeling, and therefore has high industrial applicability.

## Claims

1. A coffee-flavored chocolate composition comprising from 5 to 1500 ppb ethyl acetate and/or from 5 to 1500 ppb phenethyl alcohol, wherein
a total content of kahweol palmitate and cafestol palmitate is from 700 to 7800 mg/kg.

2. The chocolate composition according to claim 1, comprising a finely ground product of roasted coffee beans having a median diameter of from 5 to 50 µm.

3. The chocolate composition according to claim 1 or 2, comprising from 10 to 1300 ppb ethyl acetate.

4. The chocolate composition according to any one of claims 1 to 3, comprising from 10 to 1300 ppb phenethyl alcohol.

5. The chocolate composition according to any one of claims 1 to 4, wherein the total content of kahweol palmitate and cafestol palmitate is from 1000 to 7500 mg/kg.

6. The chocolate composition according to any one of claims 1 to 5, wherein the content of kahweol palmitate is from 520 to 5700 mg/kg.

7. The chocolate composition according to any one of claims 1 to 5, wherein the content of cafestol palmitate is from 180 to 2100 mg/kg.

8. The chocolate composition according to claim 2, wherein a content of the finely ground product of roasted coffee beans in a chocolate is from 4 to 38 mass%.

9. The chocolate composition according to any one of claims 1 to 8, wherein the coffee beans contain arabica coffee beans.

10. The chocolate composition according to any one of claims 1 to 9, wherein the coffee beans have a degree of roast of from L16 to L32.

11. The chocolate composition according to any one of claims 1 to 10, wherein a content of cacao mass is less than 50 mass%.

12. The chocolate composition according to any one of claims 1 to 11, wherein the chocolate composition is a white chocolate.

13. A method for producing a coffee-flavored chocolate composition, the method comprising:
adjusting a content of ethyl acetate to from 5 to 1500 ppb and/or adjusting a content of phenethyl alcohol to from 5 to 1500 ppb; and
adjusting a total content of kahweol palmitate and cafestol palmitate to from 700 to 7800 mg/kg.
